# EUROPÄISCHE PATENTSCHRIFT

(11) **EP 2 919 340 B1**
(45) Veröffentlichungstag und Bekanntmachung des Hinweises auf die Patenterteilung: **30.05.2018**
(21) Anmeldenummer: 14158973.9
(22) Anmeldetag: 11.03.2014
(51) Int. Cl.: H02G 1/12

(54) **Verfahren zum Bestimmen von Abisolierparametern zum Abisolieren eines Kabels**
Method for determining stripping parameters for stripping cable insulation
Procédé de détermination de paramètres de dénudage pour dénuder un câble

(43) Veröffentlichungstag der Anmeldung: 16.09.2015
(73) Patentinhaber: Komax Holding AG, 6036 Dierikon (CH)
(72) Erfinder: Müllers, Harald, 6042 Dietwil (CH)
(74) Vertreter: Inventio AG

(56) Entgegenhaltungen:
- WO-A1-2012/015062
- DE-C1- 4 033 315
- JP-A- 2007 151 289
- JP-A- 2008 061 460
- US-A1- 2014 041 486

## Beschreibung

Die Erfindung betrifft ein Verfahren zum automiatisierten Bestimmen von Abisolierparametern zum Abisolieren eines einen Leiter umfassenden Kabels.

Vorrichtungen und Verfahren zum Abisolieren von elektrischen Kabeln sind seit längerer Zeit bekannt. Für gute Abisolierergebnisse ist es wichtig, das Kabel möglichst nahe an den Leiter einzuschneiden. Neben der Einschneidetiefe als ersten Abisolierparameter ist es häufig vorteilhaft, die Abisoliermesser mit einer Rückstellbewegung nach dem Anschneiden wieder leicht vom Kabel wegzubewegen bzw. zu öffnen. Diese Rückstellung ist dem Fachmann auch unter dem Begriff "Wayback" bekannt und geläufig.

In der WO 2012/015062 A1 ist eine Vorrichtung zum Abisolieren von Kabeln mit einer Detektiereinrichtung zum Ermitteln von Leiterberührungen durch die Abisoliermesser beschrieben. Vor dem eigentlichen Abisolierprozess müssen die beiden Abisolierparameter, die Einschnitttiefe und die Rückstellung bzw. Messeröffnung (Wayback), von einem Maschinenbediener eingestellt werden. Das Einstellprozedere ist aufwändig, zeitraubend und unter Umständen wenig zuverlässig. Ungeübte oder unerfahrene Personen, die die jeweiligen Arbeitsstationen bedienen, können Schwierigkeiten haben, optimale Abisolierparameter zu bestimmen. Die US 2014/0041486 A1 zeigt eine weitere Vorrichtung zum Abisolieren von Kabeln mit einher Detektiereinrichtung zum Ermitteln von Leiterberührungen durch die Abisoliermesser. Nach dem Anschneiden werden die Abisoliermesser gegebenenfalls geringfügig zurückgezogen (Wayback), danach wird die angeschnittene Isolation durch Verschieben der Abisoliermesser abgezogen. Während des Abziehvorgangs kann mittels der Detektiereinrichtung festgestellt werden, ob die Abisoliermesser den Leiter berühren. Die Leiterberührungen werden dann auf einer Bildschirmoberfläche dargestellt, wobei das abzuisolierende Kabel als virtuelles Modell auf der Bildschirmoberfläche dargestellt ist.

Gemäss der DE 40 33 315 C1 sind Abisoliermaschinen bekannt, bei denen die Einschnitttiefe der Messer manuelt eingestellt unl die Qualität der Abisolierung durch Stichproben überprüft wird. Wird der Leiter durch die Messeranordnung beschädigt, wird die Messeranordnung so lange manuell nachgestellt, bis die Einschnitttiefe wieder zur gewünschten Qualität führt.

Aus der JP 2008 061460 A ist eine Vorrichtung und ein Verfahren zum Ermitteln der Einschnitttiefe bekannt geworden, wobei zum Ermitteln der optimalen Einschnitttiefe Kraftsensoren eingesetzt werden. Wenn beim Einschneiden durch Abisoliermesser die Kraftmessung ein gegenüber einem Grenzwert zu tiefer Kraftwert feststellt, wird beim nächsten Einschneiden die Einschnitttiefe erhöht.

JP 2007 151289 A zeigt ein Verfahren zum Abisolieren eines Kabels, wobei für die Er-mittlung der Einschnitttiefe verschiedene Einschnitte an drei Stellen des Kabels berücksichtigt werden.

Es ist deshalb eine Aufgabe der vorliegenden Erfindung, die Nachteile des Bekannten zu vermeiden und insbesondere ein Verfahren zum Bestimmen wenigstens eines Abisolierparameters zum Abisolieren eines einen Leiter umfassenden Kabels zu schaffen, mit der einfach und zuverlässig der oder die Abisolierparameter bestimmbar ist bzw. sind.

Erfindungsgemäss wird diese Aufgabe mit dem Verfahren mit den Merkmalen des Anspruchs 1 gelöst. Nach Bereitstellung eines sich in Längsrichtung erstreckenden Kabels, das aus einem elektrischen Leiter (z.B. Draht oder Litze) und einer den Leiter umgebenden Isolation besteht, wird zunächst die Isolation mit wenigstens einem Abisoliermesser bis zu einer Einschnitttiefe (CD) angeschnitten (Schritt a)). Bei Verfahrensbeginn wird als Einschnitttiefe eine Initial-Einschnitttiefe (CD1) gewählt (CD = CD1), bei der sichergestellt ist, dass das wenigstens eine Abisoliermesser den Leiter berührt. Die Initial-Einschnitttiefe (CD1) kann aufgrund der beispielsweise vom Kabelhersteller mitgeteilten technischen Daten des Kabels rechnerisch bestimmt werden. Alternativ ist es aber auch denkbar, aus früheren Bestimmungsverfahren bekannte Einschnitttiefen zu verwenden. Nach dem Schritt a) wird die angeschnittene Isolation durch Verschieben des wenigstens einen Abisoliermessers in Längsrichtung in Relation zum Kabel abgezogen (Schritt b)). Diese Relativbewegung zum Abziehen der Isolation umfasst beispielsweise ein Verschieben des Abisoliermessers bei festgehaltenem Kabel oder ein Verschieben des Kabels bei festgehaltenem Abisoliermesser. Das Verfahren umfasst als weiteren Schritt das Feststellen einer Leiterberührung während des Anschneidevorgangs (Schritt c)). Bei einer Leiterberührung wird die Isolation nochmals angeschnitten, wobei die Einschnitttiefe nun um einen Einschneide-Zustellwert (DCD) verringert wird. Die Einschnitttiefe (CD) beträgt damit in einem zweiten Verfahrenszyklus (bzw. zweiten Schrittfolge) CD1 - DCD. Danach wird nochmals abgezogen und wiederum festgestellt bzw. geprüft, ob eine Leiterberührung beim Anschneiden stattgefunden hat. Wenn festgestellt wird, dass beim Anschneiden keine Leiterberührung stattgefunden hat, wird die Einschnitttiefe nochmals um den Einschneide-Zustellwert (DCD) verringert. Im darauf folgenden, dritten Verfahrenszyklus ist die aktuelle Einschnitttiefe dann CD = CD1 - DCD - DCD. Die Verfahrensschritte a) - c) werden so lange wiederholt, wobei die Einschnitttiefe jeweils um einen Einschneide-Zustellwert (DCD) verringert wird, bis keine Leiterberührung beim Anschneiden mehr festgestellt wird, wodurch in einer Parameterermittlungsphase die Abisolier-Einschnitttiefe (CD2) erhalten wird. Nach jedem Abziehvorgang bzw. zwischen den Verfahrenszyklen kann ein Kabelstück mit dem abisolierten Kabelende vom Kabel abgetrennt werden. Theoretisch wäre es auch denkbar, erst nach zwei oder mehreren Verfahrenszyklen eine Ablängung vorzunehmen. Das Verfahren lässt sich einfach automatisieren und auf einer Kabelbearbeitungsstation durchführen. Die so erhaltene Abisolier-Einschnitttiefe (CD2) kann nachfolgend zur massenweisen Fertigung von zu konfektionierenden Kabeln verwendet werden. Das Verfahren erfüllt hohe Anforderungen an Zuverlässigkeit.

Für den Abziehvorgang wird das wenigstens eine Abisoliermesser um eine Rückstellung (WB) vom Kabel weggeführt. Die Rückstellung oder Messeröffnung (Wayback WB) stellt neben der Einschnitttiefe den zweiten, zu bestimmenden Abisolierparameter dar.

Erfindungsgemäss wird neben der Abisolier-Einschnitttiefe ebenfalls eine optimale Rückstellung bestimmt. Dies erfolgt auf etwa analoge Weise wie bei der Bestimmung der Abisolier-Einschnitttiefe: Nach dem Anschneiden gemäss vorbeschriebenem Schritt a) wird das wenigstens eine Abisoliermesser gegenüber der Einschnitttiefe um eine Rückstellung (WB) vom Kabel weggeführt. Bei Leiterberührung werden die Schritte a) bis c) zuzüglich des Wegführschrittes wiederholt, wobei in der Parameterermittlungsphase die Rückstellung zwischen den Verfahrenszyklen jeweils um einen Rückstellzustellwert (DWB) vergrössert wird, so lange, bis keine Leiterberührung während des Abziehvorgangs mehr festgestellt wird, wodurch die Abisolier-Rückstellung (WBF) erhalten wird.
Somit lassen sich auf effiziente Art und Weise die beiden wichtigsten Abisolierparameter bestimmen.
Weiterhin kann es vorteilhaft sein, wenn das mit der Abisolier-Einschnitttiefe (CD2) und Abisolier-Rückstellung (WBF) abisolierte Kabelende nochmals abisoliert wird, um die Einschnittstelle freizulegen. Bevorzugt wird dieser Verfahrensschritt auf derselben Vorrichtung durchgeführt, auf der vorgängig die Parameterermittlungsphase angewandt wurde. Theoretisch wäre es aber auch denkbar, dass abisolierte Kabelende manuell oder mit einer speziellen, separaten Vorrichtung abzuisolieren.
Besonders vorteilhaft wird das Kabel im Bereich der freigelegten Einschnittstelle optisch (beispielsweise mit einem Mikroskop) auf Beschädigungen untersucht. Auf diese Weise kann garantiert werden, dass der Leiter des Kabels tatsächlich unbeschädigt geblieben ist, wodurch die Produktesicherheit nochmals erhöht wird.
Eine weitere Ausführungsform betrifft das Verfahren mit folgenden, der vorgängig beschriebenen Parameterermittlungsphase bevorzugt vorgelagerten der ersten Phase. Die erste Phase zeichnet sich durch folgende Verfahrensschritte aus: e) Anschneiden einer Isolation bis zu einer vorbestimmten Einschnitttiefe (CDN) des sich entlang einer Längsachse erstreckenden Kabels mit wenigstens einem Abisoliermesser; f) Feststellen mittels einer Detektiereinrichtung, ob das wenigstens eine Abisoliermesser den Leiter berührt, g) bei Nichtvorliegen einer Leiterberührung wird das Kabel um ein Wegstück gegenüber dem wenigstens einem Abisoliermesser entlang der Längsachse in Kabelförderrichtung verschoben; h) Wiederholen der in diesem Abschnitt beschriebenen Schritte e) bis g), wobei die Einschnitttiefe jeweils um einen Einschneide-Zustellwert (DCD) erhöht wird, solange bis eine Leiterberührung festgestellt wird, wodurch in einer ersten Phase eine Initial-Einschnitttiefe erhalten wird. Für den Schritt g) kann das Kabel mittels einer Fördereinrichtung bewegt werden, während das wenigstens eine Abisoliermesser fest steht. Alternativ ist es aber auch denkbar, dass das Kabel festgehalten wird und das wenigstes eine Abisoliermesser bewegt wird.

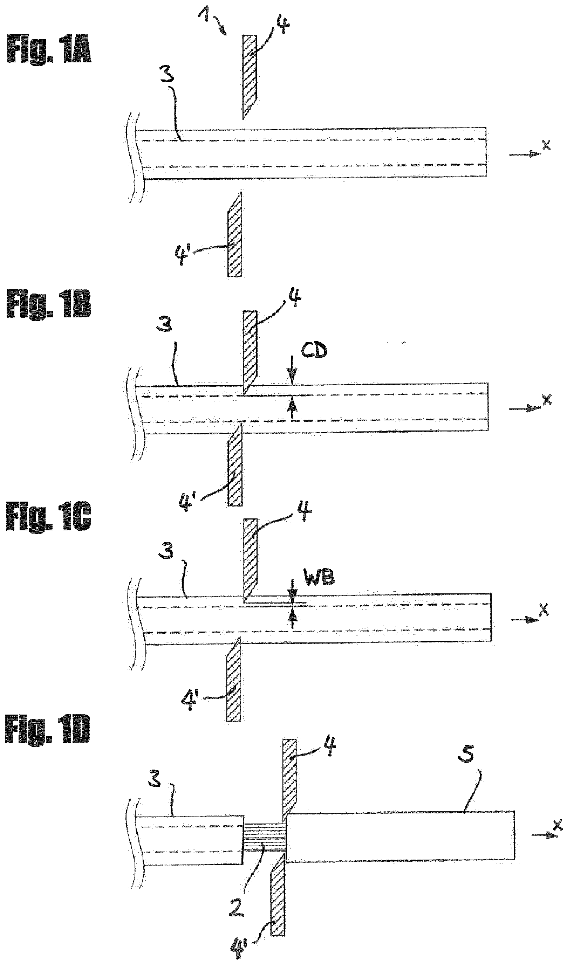

Besonders vorteilhaft kann es sein, wenn die Initial-Einschnitttiefe (CD1) als Startgrösse für die Parameterermittlungsphase verwendet wird. Somit ergibt sich ein Verfahren, welches im Wesentlichen aus zwei Phasen besteht: Der ersten Phase zum Ermitteln der Initial-Einschnitttiefe und eine zweite Phase, die der Parameterermittlungsphase entspricht, bei der zum Bestimmen eines Endwerts für die Einschnitttiefe das Kabel testweise abisoliert wird.
Das Verfahren lässt sich effizient betreiben, wenn die Einschneide-Zustellwerte (DCD) für die erste Phase grösser als die Einschneide-Zustellwerte (DCD) für die darauffolgende Parameterermittlungsphase sind.
Besonders vorteilhaft kann es sein, wenn die Einschneide-Zustellwerte für die erste Phase wenigstens doppelt so gross und vorzugsweise grösser als das fünffache wie die Einschneide-Zustellwerte für die Parameterermittlungsphase sind.
Weiter kann der Einschneide-Zustellwert für die erste Phase jeweils etwa 0,1mm betragen und der Einschneide-Zustellwert für die Parameterermittlungsphase jeweils zwischen 0,01 und 0,02mm liegen.
Ein weiterer Aspekt der Erfindung kann eine Vorrichtung zur Durchführung des vorgängig beschriebenen Verfahrens betreffen.
Schliesslich betrifft die Erfindung auch ein Computerprogramm mit den Merkmalen des Anspruchs 12. Weitere Einzelmerkmale und Vorteile der Erfindung ergeben sich aus der nachstehende Beschreibung von Ausführungsbeispielen und aus den Zeichnungen. Es zeigen:Figur 1A: eine stark vereinfachte Darstellung eines Kabels und einer Abisoliereinheit mit zwei Abisoliermessern in einer Ausgangsstellung,
- Figur 1B:: das Kabel nach Anschneiden der Kabelisolation,
- Figur 1C:: das Kabel mit um eine Rückstellung geöffneten Abisoliermessern,
- Figur 1D:: das Kabel während eines Abzieh-Vorgangs,
- Figur 2:: eine leicht vergrösserte Darstellung eines Kabels mit abisoliertem Kabelende,
- Figur 3:: ein das erfindungsgemässe Verfahren zum Bestimmen der Abisolierparameter darstellendes Flussdiagramm, und
- Figur 4:: eine weitere Vorrichtung, mit der das erfindungsgemässe Verfahren durchführbar ist.

Die in Figur 1 insgesamt mit 1 bezeichnete Vorrichtung mit einer Abisoliereinheit zum Abisolieren eines elektrischen Kabels 3 umfasst ein Messerpaar mit zwei gegeneinander bewegbaren Abisoliermessern 4 und 4'. Zum Anschneiden der Isolation sind die Messer in radialer Richtung gegen den Leiter 2 des Kabels 3 bewegbar. Figur 1 zeigt die an sich bekannten einzelnen Verfahrensschritte zum Abisolieren eines Kabels. Beim Einschneiden mit den Abisoliermessern soll die Einschnitttiefe der Messer derart sein, dass die Isolation 5 möglichst tief eingeschnitten wird, jedoch ohne eine Kerbe auf einer oder mehreren, aus beispielsweise einem Kupfermaterial oder aus Aluminium bestehenden Litzen des Leiters 3 zu verursachen. Beim Abziehen wird die Einschnitttiefe häufig etwas reduziert, damit die Messer einerseits nicht über die Litzen kratzen. Auf der anderen Seite sollen die Abisoliermesser jedoch noch soviel Überdeckung zur Isolation haben, dass die Isolationshülle sicher abgezogen werden kann. Eine Berührung des Kabels beim Abziehen könnte zur Folge haben, dass durch die Reduzierung der Kupfermasse das Litzenpacket beispielsweise bei einem nachfolgenden Crimpen nicht mehr genügend verdichtet werden kann oder dass vorgezogene Litzen Kurzschlüsse mit anderen elektrischen Bauteilen verursachen. Kerben können weiter dazu führen, dass Litzen beim Crimpen oder erst später durch mechanische Belastungen brechen und somit der leitende Querschnitt und die mechanische Festigkeit der Verbindung reduziert wird. Die Besonderheit des nachfolgend beschriebenen Verfahrens ist die spezielle Verknüpfung dieser Verfahrensschritte und Aneinanderhängen zu Verfahrenszyklen zum Bestimmen der beiden Abisolierparameter, nämlich Einschnitttiefe und Messeröffnung bzw. Rückstellung (Wayback).

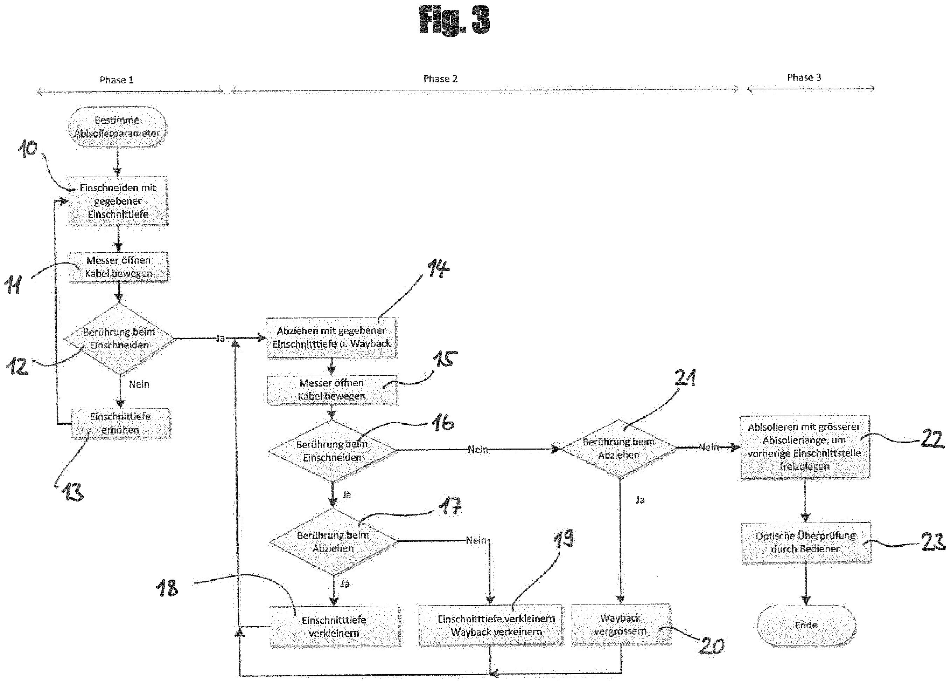

In Figur 1A befinden sich die Abisoliermesser 4, 4' der Vorrichtung 1 in einer Ausgangsstellung. Anschliessend werden die Abisoliermesser 4, 4' aufeinander zu bewegt und die Isolation des Kabels 2 wird beidseitig angeschnitten. Die Abisoliermesser 4, 4' können jeweils über eine V-förmige Schneidgeometrie verfügen. Selbstverständlich könnten die Abisoliermesser auch gerade Schneiden bzw. Schneidkanten oder andere Schneidgeometrie (z.B. mit einer Krümmung) aufweisen. Die Einschnitttiefe ist mit CD bezeichnet. Der Anschneide-Vorgang ist in Figur 1B gezeigt. Vor dem Abziehen werden die Abisoliermesser 4, 4' mit einer Rückstellbewegung leicht geöffnet. Die Rückstellung oder Messeröffnung ist in Figur 1C mit WB bezeichnet. In dieser radialen Stellung (CD - WB) wird die angeschnittene Isolation durch eine Relativbewegung zwischen Abisoliermessern 4, 4' und dem Kabel 3 abgezogen. Die Isolation 5 wird in x-Richtung vom Kabel 3 entfernt. Mit einer (hier nicht dargestellten) Detektiereinrichtung wird festgestellt, ob beim Anschneiden (Fig. 1B) und ob beim Abziehen (Fig. 1D) die Messer 4, 4' den Leiter 2 berühren. Falls Leiterberührungen ermittelt wurden, erzeugt eine (nicht dargestellte) Auswerteeinheit einen Befehl, dass nochmals abisoliert werden soll, wobei je nach Situation die Einschnitttiefen (CD) und die Rückstellungen (WB) angepasst werden. Der genaue Verfahrensablauf wird nachfolgend anhand Figur 3 im Detail erläutert.

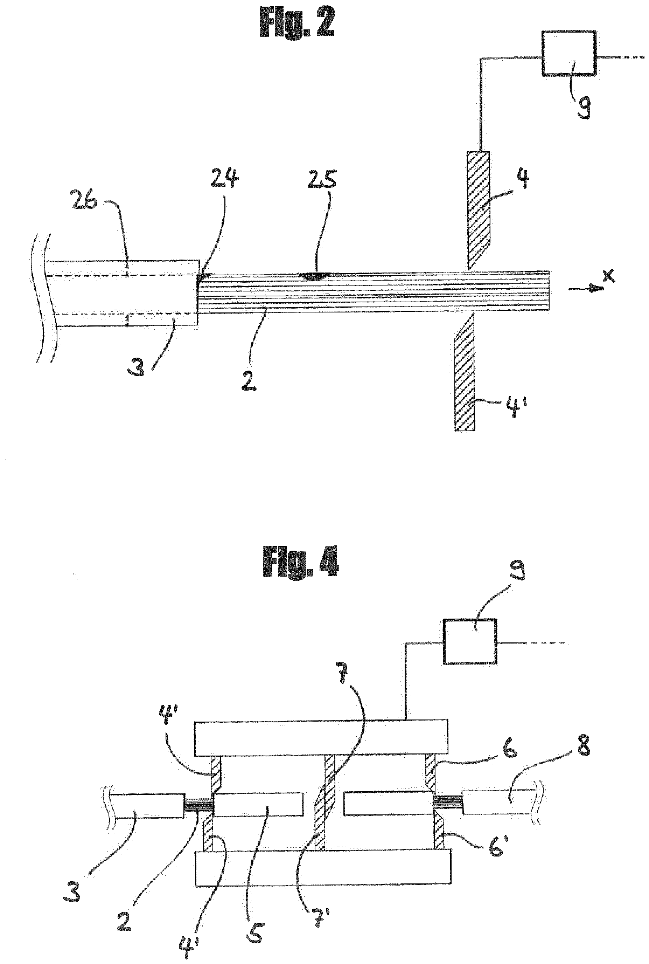

Figur 2 zeigt ein nacktes Leiterende des Leiters 2 des Kabels 3 und ein momentan in einer Längsposition auf der x-Achse befindliches Abisoliermesserpaar 4, 4'. Die durch die teilweise Abisolation entfernte hülsenförmige Isolation ist hier nicht dargestellt. Im vorliegend gezeigten Ausführungsbeispiel wurde der Leiter 2 beim Abisolieren durch Leiterberührungen beispielhaft beschädigt. Die zwei Schadstellen sind mit 24 und 25 andeutungsweise dargestellt. Mit 9 ist eine Detektiereinrichtung zum Feststellen von Leiterberührungen angedeutet. Als Detektiereinrichtung könnte beispielsweise die in WO 2012/015062 A1 oder in der DE 10 2007 053 825 A1 beschriebene Einrichtung verwendet werden. Als Detektiereinrichtung besonders vorteilhaft sind solche, mit denen es möglich ist, die Längspositionen (x) der Abisoliermesser während des Abziehvorgangs zu ermitteln. Das erfindungsgemässe Verfahren erlaubt es, durch geeignete Anreihung vom mehreren Einschneide- und Abisoliervorgängen die optimalen Einstellwerte für die Einschnitttiefe und den Wayback automatisch zu bestimmen. Dabei wird ausgenutzt, dass der Berührungssensors, abhängig vom Auswertezeitpunkt, den Ort der Berührung (beim Einschneiden oder beim Abziehen) feststellen kann. Mit 24 ist die Schadstelle bezeichnet, die durch eine Leiterberührung beim Anschneiden verursacht wurde; 25 betrifft eine Leiterberührung beim Abziehvorgang. Damit Leiterberührungen beim Anschneiden sicher erkannt werden, wird das Kabel 3 nochmals im Bereich der mit 26 angedeuteten Stelle nochmals abisoliert, wodurch die Schadstelle 24 freigelegt wird und nun unter einem Mikroskop betrachtet werden kann.

In Figur 3 ist der Ablauf des erfindungsgemässen Verfahrens zum Bestimmen der Abisolierparameter zum Abisolieren eines einen Leiter umfassenden Kabels dargestellt. Das Verfahren ist ersichtlicherweise mehrphasig ausgestaltet. In einer ersten Phase, die in Figur 3 mit "Phase 1" bezeichnet ist, wird eine Initial-Einschnitttiefe ermittelt. In der nachfolgenden zweiten Phase, die in Figur 3 mit "Phase 2" bezeichnet ist, werden schliesslich die Abisolierparameter bestimmt. Zum Nachprüfen kann eine optische Überprüfung der abisolierten Leiterenden durchgeführt werden. Diese in Figur 3 mit "Phase 3" bezeichnete dritte Phase ist allerdings optional.

In der ersten Phase (Phase 1) wird eine Einschnitttiefe (CD1) ohne Abziehen der Isolation bestimmt. Das Kabel 3 wird mit den Messer auf Basis der aus dem Kabeldurchmesser und Messergeometrie berechneten theoretischen Einschnitttiefe (CDN) eingeschnitten (Schritt 10). Wird keine Berührung zwischen Kabel und Abisoliermessern von einem Berührungssensor oder einer anderen Detektiereinrichtung detektiert (12), wird das Messerpaar geöffnet, das Kabel leicht vorwärts bewegt (Schritt 11) und mit vergrösserter Einschnitttiefe (13) erneut eingeschnitten (zurück zu Schritt 10). Es wird so oft eingeschnitten und die Einschnitttiefe erhöht, bis der Berührungssensor eine Berührung zwischen dem Messer und dem Kabel detektiert (12: Berührung beim Einschneiden? Ja). Wenn keine Leiterberührung beim Anschneiden festgestellt wird, wird die Einschnitttiefe vorteilhaft um einen vorbestimmten Wert DCD erhöht und der Vorgang nochmals mit einer um DCD erhöhten Einschnitttiefe wiederholt. Der Einschneide-Zustellwert DCD beträgt beispielsweise 0,1 mm. Bei der Wiederholung bzw. im zweiten Verfahrenszyklus ist die Einschnitttiefe CD = CDN + DCD. Im n-ten Verfahrenszyklus ist die Einschnitttiefe CD = CDN + n DCD. Sobald eine Berührung festgestellt wird, wird der letzte Wert für die Einschnitttiefe zur Durchführung der Parameterermittlungsphase "Phase 2" verwendet. Dieser letzte Wert für die Einschnitttiefe wird als Initial-Einschnitttiefe CD1 bezeichnet. Mit CD1 als Startgrösse wird das Kabel dann versuchsweise in der zweiten Phase 2 gemäss dem in Figur 3 gezeigten Verfahrensablauf abisoliert.

In der zweiten Phase werden schliesslich die die endgültige Einschnitttiefe und Rückstellung für die Abisolierung von Kabeln als Bestandteil eines Produktionsprozesses zum Konfektionieren der Kabel bestimmt. Abhängig von den Ergebnissen vom Berührungssensor werden die Einschnitttiefe und die Messeröffnung beim Abziehen schrittweise angepasst. Ausgehend von der letzten Einschnitttiefe (CD1) aus Phase 1 wird das Kabel komplett abisoliert. Die radiale Position der Abisoliermesser beim Abziehen bleibt unverändert. Die Rückstellung bzw. die Messeröffnung (WB) für den ersten Abziehvorgang ist folglich zu Beginn der Phase 2 Null. Es wäre allerdings auch vorstellbar, schon zu Beginn eine durch einen vorgängig festgesetzten Wert vorgegebene Rückstellung vorzusehen. Der Arbeitsschritt mit der Rückstellung ist in Figur 3 mit 14 bezeichnet. Die Abisoliermesser werden in eine geöffnete Stellung (Ausgangsstellung) gebracht und das Kabel wird beispielsweise mittels Band- oder Rollenförderern in axialer Richtung vorwärts bewegt (Schritt 15). Vorteilhaft ist es, wenn das Kabel nach Beendigung des Schrittes 15 abgelängt wird. Wenn eine Auswerteeinheit feststellt, dass beim Anschneiden eine Leiterberührung stattfand (Schritt 16), dann wird die Isolation nochmals angeschnitten (zurück zu Schritt 14), wobei die Einschnitttiefe nun um einen Einschneide-Zustellwert (DCD) verringert wird (Schritt 18 oder 19. Die Einschnitttiefe beträgt damit in einem zweiten Verfahrenszyklus CD1 - DCD. Danach wird nochmals abgezogen und wiederrum geprüft, ob eine Leiterberührung beim Anschneiden stattgefunden hat. Dies wird so lange wiederholt, wobei die Einschnitttiefe jeweils um einen Einschneide-Zustellwert (DCD) verringert wird, bis keine Leiterberührung beim Anschneiden mehr festgestellt wird, wodurch in einer Parameterermittlungsphase die Abisolier-Einschnitttiefe (CD2) erhalten wird.

Zu Beginn von Phase 2 entspricht die radiale Position der Abisoliermesser beim Abziehen der letzten Position nach Beendigung des Anschneidens (d.h. WB = 0). Wenn eine Auswerteeinheit im Schritt 21 eine Leiterberührung feststellt, wird der Verfahrenszyklus nun mit einer Rückstellung mit dem Wert DWB durchgeführt (zurück zu Schritt 14). In der Parameterermittlungsphase wird die Rückstellung zwischen den Verfahrenszyklen jeweils um den Rückstellzustellwert DWB vergrössert. Dies wird solange wiederholt, bis keine Leiterberührung während des Abziehvorgangs mehr festgestellt wird. Auf diese Weise lässt sich die Abisolier-Rückstellung (WBF) einfach ermitteln. Solange jedoch Leiterberührungen beim Einschneiden beim Schritt 16 auftreten und danach keine Leiterberührungen beim Abziehen festgestellt werden, dann wird der Verfahrenzyklus gemäss Figur 3 mit einer um DCD reduzierten Einschnittiefe und einer um DWB erhöhten Rückstellung beginnend mit Schritt 14 nochmals durchgeführt. Die Einschneide-Zustellwerte DCD für die Phase 1 sind in der Regel grösser als die Einschneide-Zustellwerte DCD für die darauf folgende Parameterermittlungsphase (Phase 2). Vorteilhafte Zustellwerte für die Abisoliermesser ergeben sich, wenn DCD für Phase 1 0,1 mm und DCD für Phase 2 0.01 mm bis 0.02 mm ist.

Für bestimmte Situationen wäre es auch vorstellbar, auf eine Durchführung der Phase 1 zu verzichten. Sind die Abisolierparameter zum Beispiel aus einer früheren Produktion bekannt, kann die Phase 1 weggelassen und direkt mit Phase 2 begonnen werden. Dabei kann die bei Verfahrensbeginn gewählte Einschnitttiefe gegenüber derjenigen aus der früheren Produktion erhöht werden, um sicher mit einer Berührung beim Einschneiden zu beginnen.

Bevor die Produktion mit den ermittelten Abisolierparametern freigegeben wird, kann eine optische Prüfung durch den Bediener notwendig sein. In Phase 3 geht es um eine solche optische Prüfung des Abisolierresultates nach Vorbereitung der Einschnittstelle. Damit die Stelle des Kabels, an der angeschnitten wurde, besser geprüft werden kann, wird ein zusätzlicher Abisoliervorgang mit vergrösserter Abisolierlänge durchgeführt (Schritt 22). Das "doppelt abisolierte" Kabel wird zur optischen Verifizierung unter dem Mikroskop oder ähnlichem Messgeräten bereitgestellt und geprüft (Schritt 23). Entspricht das Ergebnis der Abisolierung den geforderten Standards, können die Abisolierparameter (CD2, WBF) für die Produktion übernommen werden.

Wie Figur 4 zeigt, lässt sich das vorgängig beschriebene Verfahren auch mit einer Vorrichtung 1 durchführen, die zwei Abisoliermesserpaare 4, 4' sowie 6, 6' und ein Trennmesserpaar 7, 7' aufweist. Bei dieser Anordnung kann es - wegen ungleichmässiger Abnutzung der Messer oder ungenauer Montage - sinnvoll sein, die Bestimmung der Abisolierparameter für das abgelängte Kabelstück 8 zu wiederholen, um Beschädigungen des Kabels zu vermeiden. In diesem Fall, wird beispielweise zuerst die erste Phase (Phase 1) am Kabelende des Rest-Kabels 3 durchgeführt (vgl. Fig. 3). Anschliessend wird die Patrameterermittlungsphase (Phase 2) für beide Kabelenden 3 und 8 durchgeführt. Für Phase 3 werden ebenfalls beide Enden der Kabel untersucht.

## Patentansprüche

1. Verfahren zum automatisierten Bestimmen von Abisolierparametern (CD, WB) zum Abisolieren eines einen Leiter (2) umfassenden Kabels (3) auf einer Kabelbearbeitungsstation, **gekennzeichnet durch** folgende Schritte:
a) Anschneiden einer Isolation (5) bis zu einer Einschnitttiefe (CD) eines sich entlang einer Längsachse (x) erstreckenden Kabels (3) mit wenigstens einem Abisoliermesser (4, 4'), wobei zu Beginn als Einschnitttiefe eine Initial-Einschnitttiefe (CD) gewählt wird, bei der sichergestellt ist, dass das wenigstens eine Abisoliermesser (4, 4') den Leiter (2) berührt,
b) Abziehen der angeschnittenen Isolation (5) durch Verschieben des wenigstens einen Abisoliermessers (4, 4') in Längsrichtung (x) in Relation zum Kabel (3), wobei nach dem Anschneiden wenigstens für einen allfälligen zweiten Verfahrenszyklus das wenigstens eine Abisoliermessr (4, 4') gegenüber der Einschnitttiefe (CD) um eine Rückstellung (WB) vom Kabel (3) weggeführt wird,
c) Feststellen mittels einer Detektiereinrichtung (6) während des Anschneidevorgangs und während des Abziehvorgangs, ob das wenigstens eine Abisoliermesser (4, 4') den Leiter (2) beim Schritt a) und beim Schritt b) berührt hat,
d) Wiederholen der Schritte a) bis c), wobei die Einschnitttiefe (CD) jeweils um einen Einschneide-Zustellwert verringert wird, solange, bis keine Leiterberührung mehr festgestellt wird, wodurch in einer Parameterermittlungsphase die Abisolier-Einschnitttiefe erhalten wird und dass bei Leiterberührung die Schritte a) bis c) zuzüglich des Wegführ-Schrittes wiederholt werden, wobei in der Parameterermittlungsphase die Rückstellung (WB) zwischen den Schrillfolgen jeweils um einen Rückstell-Zustellwert vergrössert wird, solange, bis keine Leiterberührung während des Ahziehvorgangs mehr festgestellt wird, wodurch die Abisolier-Rückstellungerhallen wird.

2. Verfahren nach Anspruch 1, **dadurch gekennzeichnet, dass** nach jedem Abziehvorgang ein Kabelstück mit dem abisolierten Kabelende vom Kabel (3) abgetrennt wird.

3. Verfahren nach Anspruch 1 oder 2, **dadurch gekennzeichnet, dass** zu Verfahrensbeginn der erste Abziehvorgang (Schritt b) ohne Rückstellung durchgeführt wird.

4. Verfahren nach einem der Ansprüche 1 bis 3, **dadurch gekennzeichnet, dass** nach Beendigung der Parameterermittlungsphase das mit der Abisolier-Einschnitttiefe und Abisolier-Rückstellung abisolierte Kabelende nochmals abisoliert wird, um die Einschnittstelle freizulegen.

5. Verfahren nach Anspruch 4, **dadurch gekennzeichnet, dass** das Kabel im Bereich der freigelegten Einschnittstelle optisch auf Beschädigungen untersucht wird.

6. Verfahren nach einem der Ansprüche 1 bis 5, mit folgenden, eine erste Phase betreffenden Schritten:
e) Anschneiden einer Isolation (5) bis zu einer vorbestimmten Einschnitttiefe des sich entlang einer Längsachse (x) erstreckenden Kabels (3) mit wenigstens einem Abisoliermesser (4, 4'),
f) Feststellen mittels einer Detektiereinrichtung (6), ob das wenigstens eine Abisoliermesser (4, 4') den Leiter (2) berührt,
g) bei Nichtvorliegen einer Leiterberührung wird das Kabel (3) um ein Wegstück (L) gegenüber dem wenigstens eine Abisoliermesser (4, 4') entlang der Längsachse (x) in Kabelförderrichtung verschoben,
h) Wiederholen der Schritte e) bis g), wobei die Einschnitttiefe (CD) jeweils um einen Einschneide-Zustellwert erhöht wird, solange, bis eine Leiterberührung festgestellt wird, wodurch in einer ersten Phase eine Initial-Einschnitttiefe erhalten wird.

7. Verfahren nach Anspruch 6, **dadurch gekennzeichnet, dass** die Initial-Einschnitttiefe (CD1) als Startgrösse für die Parameterermittlungsphase verwendet wird.

8. Verfahren nach Anspruch 7, **dadurch gekennzeichnet, dass** die Einschneide-Zustellwerte für die erste Phase grösser als die Einschneide-Zustellwerte für die darauf folgende Parameterermittlungsphase sind.

9. Verfahren nach Anspruch 8, **dadurch gekennzeichnet, dass** die Einschneide-Zustellwerte für die erste Phase wenigstens doppelt so gross und vorzugsweise grösser als das Fünffache wie die Einschneide-Zustellwerte für die Parameterermittlungsphase sind.

10. Verfahren nach Anspruch 7, 8 oder 9, **dadurch gekennzeichnet, dass** der Einschneide-Zustellwert für die erste Phase jeweils etwa 0.1 mm beträgt und der Einschneide-Zustellwerte für die Parameterermittlungsphase jeweils zwischen 0.001 mm und 0.02 mm liegt.

11. Verfahren nach einem der Ansprüche 7 bis 10, **dadurch gekennzeichnet, dass** für das Verfahren eine Abläng- und Abisolier-Vorrichtung (1) mit wenigstens einem Trennmesser (5, 5') zum Durchtrennen des Kabels, wenigstens einem ersten Abisoliermesser (4, 4') zum Abisolieren eines hinteren Endes des mittels dem wenigstens einen Trennmesser (5, 5') abgelängten Kabelstücks und zweiten Abisoliermesser (6, 6') zum Abisolieren eines vorderen Endes des Rest-Kabels (8) verwendet wird, wobei die erste Phase mittels des ersten Abisoliermesser (4, 4') am abgelängten Kabelstück oder des zweiten Abisoliermessers (6, 6') am Rest-Kabel durchgeführt wird und dass am abgelängten Kabelstück und am Rest-Kabel (8) die Parameterermittlungsphase durchgeführt wird.

12. Computerprogramm umfassend Befehle zur Durchführung des Verfahrens nach einem der Ansprüche 1 bis 11, wenn das Computerprogramm auf einem Computer einer Kabelbearbeitungsstation abläuft.

## Claims

1. Method for automatically determining insulation stripping parameters (CD, WB) for stripping insulation from a cable (3) comprising a conductor (2), **characterized by** the following steps:
a) making an incision in an insulation (5) up to a cutting depth (CD) of a cable (3) extending along a longitudinal axis (x) with at least one insulation stripping blade (4, 4'), wherein as the cutting depth an initial cutting depth (CD) is first chosen, at which it is ensured that the at least one insulation stripping blade (4, 4') touches the conductor (2),
b) removing the incised insulation (5) by moving the at least one insulation stripping blade (4, 4') in a longitudinal direction (x) in relation to the cable (3), wherein after the incision, at least for a possible second method cycle the at least one insulation stripping blade (4, 4') is withdrawn from the cable (3) by a reset distance (WB) relative to the incision depth (CD),
c) using a detection device (6), determining whether the at least one insulation stripping blade (4, 4') has touched the conductor (2) during step a) and step b),
d) repetition of the steps a) to c), wherein the cutting depth (CD) is continually reduced by a cutting depth adjustment value until conductor contact is no longer detected, as a result of which the insulation removal cutting depth is obtained in a parameter determination phase and that on contact with the conductor the steps a) to c) plus the reset step are repeated, wherein in the parameter determination phase the reset distance (WB) is increased between each step sequence until conductor contact is no longer detected during the stripping operation, as a result of which the insulation removal reset distance is obtained.

2. Method according to Claim 1,
**characterized in that**
after each stripping operation a portion of cable with the stripped cable end is separated from the cable (3).

3. Method according to Claim 1 or 2,
**characterized in that**
at the beginning of the method the first removal operation (step b) is performed without resetting.

4. Method according to any one of Claims 1 to 3, **characterized in that**
after completion of the parameter determination phase the cable end, which was stripped of insulation with the insulation-stripping cutting depth and insulation-stripping reset, is again stripped of insulation in order to expose the incision point.

5. Method according to Claim 6,
**characterized in that**
the cable is visually examined for damage in the region of the exposed incision point.

6. Method according to any one of Claims 1 to 5, having the following steps, relating to a first phase:
e) making an incision into an insulation (5) up to a pre-defined cutting depth of the cable (3) extending along a longitudinal axis (x) with at least one insulation stripping blade (4, 4'),
f) determining by means of a detection device (6), whether the at least one insulation stripping blade (4, 4') is touching the conductor (2),
g) in the absence of conductor contact the cable (3) is moved relative to the at least one insulation stripping blade (4, 4') by a short distance (L) along the longitudinal axis (x) in the cable feed direction,
h) repetition of the steps e) to g), wherein the cutting depth (CD) is continually increased by a cutting depth adjustment value until a conductor contact is detected, as a result of which an initial cutting depth is obtained.

7. Method according to Claim 6,
**characterized in that**
the initial cutting depth (CD1) is used as a starting value for the parameter determination phase.

8. Method according to Claim 7,
**characterized in that**
the cutting depth adjustment values for the first phase are larger than the cutting depth adjustment values for the following parameter determination phase.

9. Method according to Claim 8,
**characterized in that**
the cutting depth adjustment values for the first phase are at least twice a large and preferably more than five times as large as the cutting depth adjustment values for the parameter determination phase.

10. Method according to Claim 7, 8 or 9,
**characterized in that**
the cutting depth adjustment value for the first phase is approximately 0.1 mm in each case and the cutting depth adjustment values for the parameter determination phase are each between 0.001 mm and 0.02 mm.

11. Method according to any one of Claims 8 to 12,
**characterized in that**
for the method a trimming and insulation-striping device (1) with at least one cutting blade (5, 5') for cutting through the cable, at least one first insulation stripping blade (4, 4') for stripping the insulation from a rear end of the cable portion trimmed using the at least one cutting blade (5, 5') and second insulation stripping blade (6, 6') for stripping the insulation from a front end of the cable remainder (8) are used, wherein the first phase is performed by means of the first insulation stripping blade (4, 4') on the trimmed cable portion or by means of the second insulation stripping blade (6, 6') on the cable remainder, and that the parameter determination phase is carried out on the trimmed cable portion and on the cable remainder (8).

12. Computer program with a program code for carrying out the method according to any one of Claims 1 to 11,
when the computer program is running on a computer of a cable processing station.

## Revendications

1. Procédé de détermination automatisée de paramètres de dénudage (CD, WB) pour le dénudage d'un câble (3) comprenant un conducteur (2) sur une station d'usinage de câbles, **caractérisé par** les étapes suivantes :
a) incision d'un isolant (5) jusqu'à une profondeur de coupe (CD) d'un câble (3) s'étendant le long d'un axe (x) au moyen d'au moins une lame de dénudage (4, 4'), sachant qu'on choisit au début comme profondeur de coupe une profondeur de coupe initiale (CD) à laquelle on est sûr qu'au moins une lame de dénudage (4, 4') touche le conducteur (2),
b) retrait de l'isolant coupé (5) en décalant l'au moins une lame de dénudage (4, 4') dans le sens longitudinal (x) par rapport au câble (3), sachant que, après l'incision, au moins pour un second cycle opératoire éventuel, l'au moins une lame de dénudage (4, 4') est éloignée du câble (3) par rapport à la profondeur de coupe (CD) à raison d'un recul (WB),
c) vérification, au moyen d'un dispositif de détection (6), pendant l'opération d'incision et pendant l'opération de retrait, de la mise en contact de l'au moins une lame de dénudage (4, 4') avec le conducteur (2) à l'étape a) et à l'étape b),
d) répétition des étapes a) à c), la profondeur de coupe (CD) étant respectivement réduite à raison d'une valeur d'approche de coupe tant qu'on ne constate plus de contact avec le conducteur, ce qui a pour effet, dans une phase de détermination de paramètres, de maintenir la profondeur de coupe de dénudage, et que, en cas de contact avec le conducteur, les étapes a) à c) plus l'étape d'éloignement sont répétées, sachant que, dans la phase de détermination de paramètres, le recul (WB) entre les successions d'étapes est augmenté respectivement à raison d'une valeur d'approche de recul tant qu'on ne constate plus de contact avec le conducteur pendant l'opération de retrait, ce qui fait que le recul de dénudage est conservé.

2. Procédé selon la revendication 1, **caractérisé en ce que**, après chaque opération de retrait, un morceau de câble comportant le câble dénudé est séparé du câble (3).

3. Procédé selon la revendication 1 ou 2, **caractérisé en ce que**, au début du procédé, la première opération de retrait (étape b) est réalisée sans recul.

4. Procédé selon une des revendications 1 à 3, **caractérisé en ce que**, à la fin de la phase de détermination de paramètres, le bout de câble dénudé avec la profondeur de coupe de dénudage et le recul de dénudage est de nouveau dénudé afin de dégager le point de coupe.

5. Procédé selon la revendication 4, **caractérisé en ce que** le câble subit un examen visuel pour vérifier l'absence de détériorations au niveau du point de coupe dégagé.

6. Procédé selon une des revendications 1 à 5, comportant les étapes suivantes concernant une première phase :
- incision d'un isolant (5) jusqu'à une profondeur de coupe prédéfinie du câble (3) s'étendant le long d'un axe (x) au moyen d'au moins une lame de dénudage (4, 4'),
- vérification, au moyen d'un dispositif de détection (6), de la mise en contact de l'au moins une lame de dénudage (4, 4') avec le conducteur (2),
- en cas de non-présence d'un contact avec le conducteur, le câble (3) est décalé à raison d'un tronçon de parcours (L) par rapport à l'au moins une lame de dénudage (4, 4') le long de l'axe longitudinal (x) dans le sens de convoyage du câble,
- répétition des étapes, la profondeur de coupe (CD) étant respectivement augmentée à raison d'une valeur d'approche de coupe jusqu'à ce qu'on constate un contact avec un conducteur, ce qui a pour effet qu'une profondeur d'incision initiale est conservée dans une première phase.

7. Procédé selon la revendication 6, **caractérisé en ce que** la profondeur d'incision initiale (CD1) est utilisée comme valeur de départ pour la phase de détermination de paramètres.

8. Procédé selon la revendication 7, **caractérisé en ce que** la profondeur d'incision initiale pour la première phase est supérieure à la valeur d'approche de coupe pour la phase de détermination de paramètres suivante.

9. Procédé selon la revendication 8, **caractérisé en ce que** les valeurs d'approche de coupe pour la première phase sont au moins le double et de préférence sont supérieures au quintuple des valeurs d'approche de coupe pour la phase de détermination de paramètres.

10. Procédé selon la revendication 7, 8 ou 9, **caractérisé en ce que** la valeur d'approche de coupe pour la première phase est respectivement d'environ 0,1 mm et la valeur d'approche de coupe pour la phase de détermination de paramètres est respectivement de 0,001 mm à 0,02 mm.

11. Procédé selon une des revendications 7 à 10, **caractérisé en ce qu'**on utilise pour le procédé un dispositif de sectionnement et de dénudage (1) comportant au moins une lame de coupe (5, 5') pour couper le câble, au moins une première lame de dénudage (4, 4') pour dénuder un bout arrière du morceau de câble sectionné au moyen d'au moins une lame de coupe (5, 5') et une seconde lame de dénudage (6, 6') pour dénuder un bout avant du reste du câble (8), la première phase étant réalisée au moyen de la première lame de dénudage (4, 4') au niveau du morceau de câble sectionné ou de la seconde lame de dénudage (6, 6') au niveau du reste du câble, et **en ce que** la phase de détermination de paramètres est réalisée au niveau du morceau de câble sectionné et au niveau du reste du câble (8).

12. Programme informatique comprenant des instructions de réalisation du procédé selon une des revendications 1 à 11 lorsque ce programme est exécuté sur un ordinateur d'une station d'usinage de câbles.
